# EUROPÄISCHE PATENTSCHRIFT

(11) **EP 0 879 692 B1**
(45) Veröffentlichungstag und Bekanntmachung des Hinweises auf die Patenterteilung: **08.09.1999**
(21) Anmeldenummer: 98107894.2
(22) Anmeldetag: 30.04.1998
(51) Int. Cl.: B29C 51/26, B29C 51/30, B29C 33/30

(54) **Formstation einer Vorrichtung zum Tiefziehen einer erwärmten Platte aus thermoplastischem Kunststoff**
Forming station for deep drawing a heated thermoplastic sheet
Station de formation pour l'emboutissage d'une feuille thermoplastique chauffée

(30) Priorität: 23.05.1997 DE 19721593
(43) Veröffentlichungstag der Anmeldung: 25.11.1998
(73) Patentinhaber: Adolf Illig Maschinenbau GmbH & Co, D-74081 Heilbronn (DE)
(72) Erfinder: Schwarzmann, Peter, 74081 Heilbronn (DE)

(56) Entgegenhaltungen:
- DE-C- 3 313 020
- US-A- 4 792 112
- PATENT ABSTRACTS OF JAPAN vol. 11, no. 327 (M-635), 24.Oktober 1987 & JP 62 109612 A (FUJITSU), 20.Mai 1987,
- PATENT ABSTRACTS OF JAPAN vol. 13, no. 593 (M-914), 27.Dezember 1989 & JP 01 249410 A (OMORI KAZUMITSU), 4.Oktober 1989,

## Beschreibung

Die Erfindung betrifft eine Formstation nach der Gattung des Hauptanspruches.

In einer solchen Formstation sind zwei Spannrahmen zum Einspannen der Platte angeordnet, ferner ein höhenbeweglicher Tisch zur Aufnahme einer Tiefziehform entsprechend der Form der herzustellenden Teile. Durch den konstruktiven Aufbau der Formstation im Bereich der Spannrahmen ergibt sich ein relativ großer Abstand zwischen dem Formtisch und der Einspannebene, und zwar vor allem dann, wenn die Thermoformmaschine, zu der die Formstation gehört, mit einem Transport zum automatischen Zuführen von Platten oder Folienbahnabschnitten ausgestattet ist und/oder beim Einsatz von Verkleinerungsrahmen bzw. verstellbaren Rahmen aus Stabilitätsgründen. Der Abstand muß durch ein Formbrett, auf dem die Tiefziehform sitzt, und einen Unterbau überbrückt werden. Eine Überbrückung allein durch ein dickes Formbrett - die Dicke müßte in der Größenordnung von 100 mm liegen - wäre zu teuer und zu gewichtig.

Aus der DE 33 13 020 C 1 ist es bekannt, diese Distanz durch einen Distanzrahmen aus Profilstäben zu überbrücken. Das bedeutet, daß zu jeder Tiefziehform ein entsprechender Distanzrahmen angefertigt werden muß und diese dadurch verteuert. Die Fertigungszeit wird länger, die Tiefziehform schwerer.

Es ist Aufgabe der Erfindung, die Formstation so zu gestalten, daß auf individuelle Unterbauten an den Tiefziehformen verzichtet werden kann, dabei die Formstation aber weiterhin an unterschiedliche Formate angepaßt werden kann. Kosten, Gewicht und Fertigungszeit der Tiefziehformen sollte dadurch reduziert werden.

Zur Lösung der Aufgabe wird vorgeschlagen, auf dem Formtisch in ihrer Lage veränderbare Distanzleisten anzuordnen, die individuell für alle Formate eingesetzt werden können. Hinsichtlich vorteilhafter Weiterbildungen wird auf die Unteransprüche verwiesen.

Der Gegenstand der Erfindung wird nachfolgend anhand der schematischen Zeichnungen beschrieben. Es zeigt:
- Figur 1: einen Schnitt durch die Formstation
- Figur 2: eine Draufsicht auf den Tisch
- Figur 3: einen vergrößerten Ausschnitt des Tisches - manuelle Verstellung
- Figur 4: einen Schnitt durch den Tisch bei motorischer Verstellung.

Die Formstation besteht im wesentlichen aus einem Rahmen 1, einem Blaskasten 2, einem oberen Spannrahmen 3, einem unteren Spannrahmen 4 und dem höhenbeweglichen Tisch 5, der eine Tiefziehform 6 trägt. Ein Streckhelfer 7 kann vorhanden sein. Zum Beheizen der eingespannten Platte 8 dient eine horizontal verschiebbare Heizung 9, die auch seitlich der Formstation angeordnet sein kann, falls der Formstation eine separate Heizstation und eine entsprechende Transporteinrichtung vorgeschaltet sind. Die Tiefziehform 6 setzt sich aus der eigentlichen Form 10 und einer Grundplatte 11 zusammen. Im eingebauten Zustand sitzt diese Grundplatte 11 auf vier Distanzleisten 12. Diese Distanzleisten 12 sind in ihrer Lage veränderbar auf dem Tisch 5 angeordnet. Eine Möglichkeit besteht darin, Reihen mit Befestigungsgewinden im Tisch 5 vorzusehen, sodaß die Distanzleisten 12 stufenweise verstellt und befestigt werden können. Eine andere Möglichkeit besteht darin, analog Reihen mit glatten Bohrungen im Tisch 5 vorzusehen und die Distanzleisten 12 mit Zentrierzapfen auszubilden, sodaß die Distanzleisten 12 einfach umgesteckt werden können. Je nach Befestigung der Grundplatte 11 am Tisch 5 sind diese Distanzleisten 12 dann einfach festgeklemmt und bedürfen keiner eigenen Befestigung.

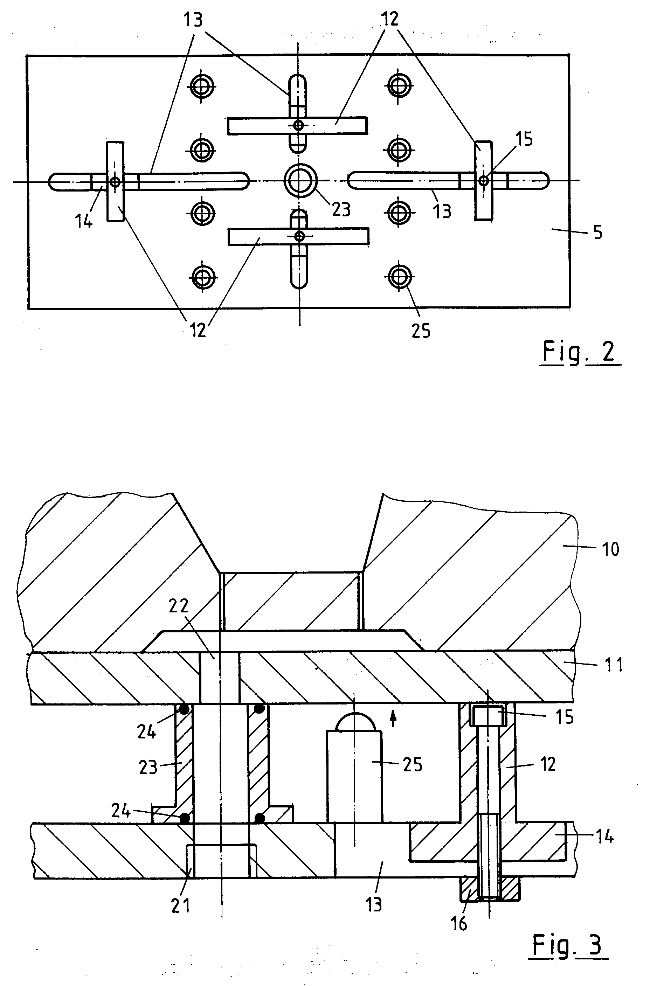

Eine stufenlose Verstellung manueller Art ist in den Figuren 2 und 3 dargestellt. Dazu sind im Tisch 5 vier Langlöcher 13 eingearbeitet und die Distanzleisten 12 gleiten in einem an ihnen befestigten Führungsteil 14 in diesen. Eine Verstellung und damit Anpassung an unterschiedliche Größen von Grundplatten 11 kann, wie in Figur 3 dargestellt, von Hand erfolgen, in dem die Distanzleisten 12 über eine Schraube 15 mit einem Klemmstück 16 in Wirkverbindung stehen.

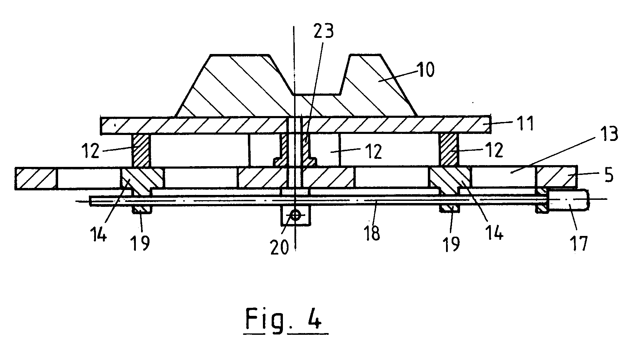

Gemäß Figur 4 kann die Verstellung auch motorisch paarweise erfolgen. Ein Motor 17 pro Distanzleistenpaar treibt je eine Gewindespindel 18, 20 mit Rechts-/Linksgewinde an. Diese wirken mit entsprechenden Gewinden in Laschen 19 zusammen, wobei die Laschen 19 an den Führungsteilen 14 befestigt sind.

Im Zentrum des Tisches 5 sitzt ein Vakuumanschluß 21. Um die Distanz zum Anschluß 22 in der Grundplatte 11 zu überbrücken, sitzt auf dem Tisch 5 ein Zwischenstück 23 mit Dichtungen 24, so daß nach dem Absetzen der Grundplatte 11 automatisch die Vakuumverbindung hergestellt ist.

Zum leichteren Einbau bzw. Ausbau einer Tiefziehform 6 sind auf dem Tisch 5 pneumatisch höhenverschiebbare Kugelrollen 25 angeordnet. Fährt man sie nach oben, kann die Tiefziehform 6 leicht darauf verschoben werden, weil sie so ausgebildet sind, daß sie im ausgefahrenen Zustand die Grundplatte 11 von den Distanzleisten 12 abheben. Nicht dargestellte Zentriereinrichtungen zentrieren die Tiefziehform 6 beim Absenken der Kugelrollen 25.

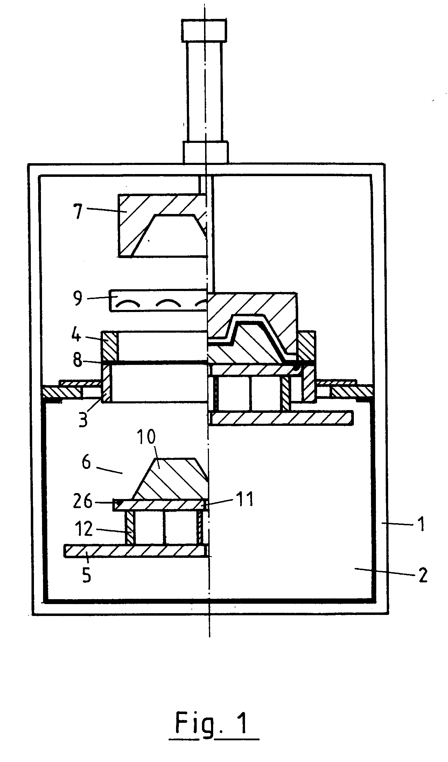

Wie aus Figur 1 erkennbar, steht der Spannrahmen 4 nach innen über den Spannrahmen 3 vor, so daß nach dem Hochfahren des Tisches 5 die Grundplatte 11 die Platte 8 gegen den Spannrahmen 4 ringsum andrückt. Eine ringsum verlaufende Dichtung 26 kann bei Bedarf vorgesehen sein und dichtet das Vakuum beim Tiefziehen ab.

## Patentansprüche

1. Formstation einer Vorrichtung zum Tiefziehen einer erwärmten Platte aus thermoplastischem Kunststoff mittels Differenzdruck mit zwei Spannrahmen (3, 4) zum Einspannen der Platte, einem höhenbeweglichen Tisch (5) zur Aufnahme einer Tiefziehform (6) und einer Distanz zwischen dem Tisch und der Grundplatte (11) der Tiefziehform, dadurch gekennzeichnet, daß diese Distanz von vier auf dem Tisch (5) angeordneten, in ihrer Lage veränderbaren Distanzleisten (12) gebildet wird.

2. Formstation nach Anspruch 1 dadurch gekennzeichnet, daß im Tisch (5) Reihen von Gewinden oder Löchern angeordnet sind, an denen die Distanzleisten (12) verschraubt oder eingesteckt werden können.

3. Formstation nach Anspruch 1 dadurch gekennzeichnet, daß die Distanzleisten (12) in je einem Langloch (13) geführt sind, in dem sie an der Unterseite ein Führungsteil (14) in der Breite des Langloches (13) aufweisen.

4. Formstation nach Anspruch 1 oder 2 dadurch gekennzeichnet, daß die Führungsleisten (12) eine motorische Verstellung aufweisen.

5. Formstation nach Anspruch 4 dadurch gekennzeichnet, daß je ein Motor (17) über eine Gewindespindel (18, 20) mit Rechts-/Linksgewinde paarweise eine Verstellung der Distanzleisten (12) vornimmt, in dem diese Gewindespindel (18, 20) in Laschen (19) mit Gewinde verlaufen, die mit den Führungsteilen (14) verbunden sind.

6. Formstation nach einem der Ansprüche 1 bis 5 gekennzeichnet durch höhenverschiebbare Kugelrollen (25), die so ausgebildet sind, daß sie in ausgefahrenem Zustand die Grundplatte (11) von den Distanzleisten (12) abheben.

7. Formstation nach einem der Ansprüche 1 bis 6 dadurch gekennzeichnet, daß der obere Spannrahmen (4) nach innen über den unteren Spannrahmen (3) vorsteht und das lichte Maß des unteren Spannrahmens (3) und das Außenmaß der Grundplatte (11) einander angepaßt sind.

## Claims

1. Moulding station of a device for deep-drawing a heated sheet of thermoplastic synthetic material by means of differential pressure, with two clamping frames (3, 4) for clamping in the sheet, a table (5), which is movable in height, for reception of a deep-drawing mould (6) and a spacer between the table and the base plate (11) of the deep-drawing mould, characterised in that this spacer is formed by four spacer strips (12) which are arranged on the table (5) and variable in their position.

2. Moulding station according to claim 1, characterised in that rows of threads or holes, at which the spacer strips (12) can be screwed or plugged, are arranged in the table (5).

3. Moulding station according to claim 1, characterised in that the spacer strips (12) are each guided in a respective slot (13), in that they have at the underside a guide part (14) in the width of the slot (12).

4. Moulding station according to claim 1 or 2, characterised in that the guide strips (12) have a motorised adjustment.

5. Moulding station according to claim 4, characterised in that a respective motor (17) undertakes an adjustment of the spacer strips (12) in pairs by way of a threaded spindle (18, 20) with righthand and lefthand threads, in that these threaded spindles (18, 20) run in tongues (19) with threads, which are connected with the guide parts (14).

6. Moulding station according to one of claims 1 to 5, characterised by ball rollers (25) which are displaceable in height and so constructed that in the moved-out state they lift the base plate (11) off the spacer strips (12).

7. Moulding station according to one of claims 1 to 6, characterised in that the upper clamping frame (4) projects inwardly beyond the lower clamping frame (3) and the clear dimension of the lower clamping frame (3) and the outer dimension of the base plate (11) are matched to one another.

## Revendications

1. Station de formage d'un dispositif d'emboutissage profond d'une plaque chauffée en matière thermoplastique par une différence de pression, comportant deux châssis (3, 4) pour fixer la plaque sur une table (5) mobile en hauteur pour recevoir un moule d'emboutissage profond (6) à une distance entre la table et la plaque de base (11) du moule d'emboutissage profond,
caractérisée en ce que
cette distance est formée par quatre longerons d'écartement (12), de position variable, placés sur la table (5).

2. Station de formage selon la revendication 1,
caractérisée en ce que
la table (5) comporte une série de filetages ou de trous sur lesquels on visse ou on engage les longerons d'écartement (12).

3. Station de formage selon la revendication 1,
caractérisée en ce que
les longerons d'écartement (12) sont guidés chacun dans un trou oblong (13) dans lequel, au niveau de la face inférieure, il comporte une pièce de guidage (14) ayant la largeur du trou oblong (13).

4. Station de formage selon la revendication 1 ou 2,
caractérisée en ce que
les longerons de guidage (12) comportent un actionneur à moteur.

5. Station de formage selon la revendication 4,
caractérisée en ce qu'
un moteur (17) respectif assure, par l'intermédiaire d'une broche filetée (18, 20), avec un filetage droit/gauche, par paire, un réglage des longerons d'écartement (12) du fait que cette broche filetée (18, 20) passe dans les pattes (19) filetées, reliées aux pièces de guidage (14).

6. Station de formage selon l'une des revendications 1 à 5,
caractérisée par
des galets sphériques (25) coulissant en hauteur, réalisés pour qu'à l'état déployé ils soulèvent la plaque de base (11) par rapport aux longerons d'écartement (12).

7. Station de formage selon l'une des revendications 1 à 6,
caractérisée en ce que
le châssis supérieur (4) dépasse vers l'intérieur par rapport au châssis intérieur (3) et la dimension libre du châssis inférieur (3) et la dimension extérieure de la plaque de base (11) sont adaptées l'une par rapport à l'autre.
